# EUROPÄISCHE PATENTANMELDUNG

(11) **EP 3 248 952 A1**
(43) Veröffentlichungstag der Anmeldung: **29.11.2017**
(21) Anmeldenummer: 16171112.2
(22) Anmeldetag: 24.05.2016
(51) Int. Cl.: C04B 7/12, C04B 7/13, C04B 28/04, C04B 14/04, C04B 28/06

(54) **KLINKERERSATZMATERIAL AUS ALUMINIUMSILIKAT UND DOLOMIT**

(71) Anmelder: HeidelbergCement AG, 69120 Heidelberg (DE)
(72) Erfinder: BULLERJAHN, Frank, 69181 Leimen (DE); ZAJAC, Maciej, 69126 Heidelberg (DE); NIED, Dominik, 76661 Philippsburg (DE)
(74) Vertreter: Zellentin & Partner mbB Patentanwälte

(57) **Zusammenfassung**

Die vorliegende Erfindung betrifft ein Verfahren zur Herstellung eines Klinkerersatzmaterials umfassend die Schritte:
- Bereitstellen eines Ausgangsmaterials enthaltend Dolomit und Aluminiumsilikat,
- Umsetzen des Ausgangsmaterials zu dem Klinkerersatzmaterial durch Brennen unter reduzierenden Bedingungen im Temperaturbereich von >700 bis 1100 °C oder durch Brennen im Temperaturbereich von 625 bis 950 °C in Anwesenheit eines Mineralisators,
- und Abkühlen des Klinkerersatzmaterials. Die Erfindung betrifft weiterhin ein Bindemittel umfassend Zement und das gemahlene Klinkerersatzmaterial.

## Beschreibung

Die vorliegende Erfindung betrifft die Herstellung eines neuartigen puzzolanischen bzw. latent-hydraulischen Klinkerersatzmaterials, im folgenden auch kurz SCM (vom englischen supplementary cementitious material) genannt, und Bindemittel, welche dieses im Gemisch mit Zement, insbesondere Portlandzement, enthalten.

Zement und hier vor allem Portlandzement, im folgenden kurz OPC (vom englischen ordinary portland cement) ist einerseits ein wichtiges Baumaterial, andererseits benötigt seine Herstellung große Mengen Energie und mineralische Rohstoffe. Daher wird schon lange versucht, sowohl den Energie- als auch den Rohstoffbedarf zu senken wie z.B. durch den Einsatz von Neben- und Abfallprodukten.

Der Ersatz von Portlandzementklinker durch SCM eignet sich besonders gut, um diese Ziele zu erreichen. Einerseits senken SCM den Rohstoffeinsatz, da es sich bei ihnen häufig um Neben- und Abfallprodukte handelt. So gehören Hüttensand und Flugasche zu den am meisten verwendeten SCM. Andererseits reduziert die Verringerung des Klinkergehaltes die für dessen Herstellung benötigte Energie, da SCM weniger Energie zur Herstellung benötigen als Klinker.

Allerdings eignen sich längst nicht alle Neben- und Abfallprodukte als SCM. Die puzzolanische bzw. latent-hydraulische Reaktivität darf nicht zu gering sein, da ansonsten die Eigenschaften des aus dem Zement und SCM erzeugten Baumaterials leiden. Beispielsweise kann kalzinierter Ton nur dann als SCM eingesetzt werden, wenn er eine hohe mineralogische Reinheit aufweist, idealerweise aus nur einem Tonmineral besteht. Der Gehalt an Aluminiumoxid und das Al₂O₃/SiO₂ Verhältnis sollten hoch sein. Die Aktivierung durch Kalzinieren erfordert zudem die Einhaltung eines engen Temperaturfensters, sowie möglichst kurze Kalzinierzeiten, bis hinab zu Sekunden. Da Ton eine hohe Absorption und Feinheit aufweist, wird z.B. für Beton aus Zement und einem solchen SCM eine große Menge Verflüssiger benötigt, um den erhöhten Wasseranspruch zu kompensieren. Zusatzmittel können an der Oberfläche und in den Tonzwischenschichten ad- bzw. absorbiert werden, was höhere Einsatzmengen nötig macht.

In der Praxis sind qualitativ hochwertige, aus wenigen oder nur einer Phase bestehende Tone selten und daher wegen der Konkurrenz mit anderen Industriezweigen zu teuer. Bei Mischungen ist es aber schwierig, eine optimale Temperatur beim Kalzinieren einzustellen, bzw. die verschiedenen optimalen Temperaturen für verschiedene Bestandteile erlauben es nicht, das gesamte Ausgangsmaterial zu aktivieren. Ist die Temperatur zu niedrig, werden zu kleine Mengen aktiviert. Bei etwas höheren Temperaturen aktiviert man nur die Phasen, die schon bei diesen geringeren Temperaturen reagieren, was meist ein immer noch zu kleiner Anteil ist. Bei mittleren Temperaturen wird zwar in der Regel ein ausreichender Anteil aktiviert, aber einige Anteile des Ausgangsmaterials bilden schon kristalline und damit inerte Phasen. Bei hohen Temperaturen werden zwar (fast) alle Anteile des Ausgangsmaterials umgesetzt, dafür bilden aber auch die meisten Anteile bereits inerte, kristalline Phasen. Die verschiedenen Tonminerale haben folgende optimale Kalziniertemperaturen:
- Serpentinite 400 bis 500°C,
- Palygorskit 600 bis 800°C,
- Kaolinite 600 bis 800°C,
- Halloysit 600 bis 800°C,
- Pyrophyllit 750 bis 950°C,
- Montmorillonit 800 bis 950°C,
- Illite 800 bis 1000°C,
- Glimmer 650 bis 1000°C.

Nicht umgesetzte Phasen haben einen besonders hohen Wasseranspruch, so dass sie möglichst vermieden werden müssen. Viele Ausgangsmaterialien haben auch einen zu geringen Al₂O₃ Gehalt, dafür aber viel SiO₂ und andere Bestandteile wie Fe₂O₃, CaO, MgO, Na₂O und K₂O. Aus diesem Grunde können viele Tone nicht wirtschaftlich genutzt werden und Ton-enthaltende bzw. -reiche Materialien müssen unter Umständen deponiert werden.

Es hat schon Vorschläge gegeben, solche Tone durch hydrothermale Behandlung oder durch Kalzinieren im Gemisch mit Kalkstein bzw. durch Kombination mit Kalkstein als SCM nutzbar zu machen, siehe beispielsweise EP 2 253 600 A1 und US 5,626,665. In der Doktorarbeit Tobias Danner, "Reactivity of calcined clays", ISBN 978-82-471-4553-1 wurde aufgezeigt, dass es keinen Einfluss auf die Reaktivität des kalzinierten Materials hat, wenn Kalkstein bereits im Ausgangsmaterial vorhanden ist oder diesem vor dem Brennen zugesetzt wird. In dieser Studie wurde weiterhin festgestellt, dass das Material mit dem höchsten MgO-Gehalt, entstammend aus Magnesiumsilikat-Verbindungen (d.h. nicht aus Magnesiumkarbonat oder Dolomit bis dolomitischer Kalkstein), nicht ausreichend aktiviert werden konnte, um als SCM eingesetzt zu werden, in anderen Worten die geringste puzzolanische Reaktivität aufweist. Ebenfalls hat diese Studie gezeigt, dass das Kalk-Bindevermögen (in anderen Worten, die puzzolanische Reaktivität) der untersuchten Materialien bei 700 bis 800°C Brenntemperatur sein Maximum erreicht und schon bei leicht höheren Temperaturen von über 800°C, z.B. 850°C, das Material sehr massiv an Reaktivität verliert. D.h., höhere Temperaturen führten zu Materialien mit nur sehr niedriger bis gar keiner Reaktivität. Dieses Verfahren konnte folglich die Probleme bei Tonen mit gemischten Phasen, die sehr unterschiedliche Kalziniertemperaturen benötigen, nicht lösen. Des weiteren ist in der Studie kein positiver Effekt, des in sehr geringen Gehalten vorliegendem Dolomit zu erkennen, da dieser nicht in ausreichenden Mengen zugesetzt wurde und auch zu niedrige Brenntemperaturen verwendet wurden. Ein Fachmann kann dieser Arbeit einen synergetischen Effekt der gemeinsamen Kalzinierung von Dolomit bis dolomitischer Kalkstein zusammen mit einem Ton, und einen Einsatz des erhaltenen Materials als SCM nicht entnehmen.

Ein weiteres für die Zementklinkerherstellung und als SCM nicht verwertbares Material ist Dolomit. MgO kann nur bis zu einer Menge von wenigen Prozent in Portlandklinker eingebaut werden, ein darüber hinausgehender Anteil im Rohmehl liegt nach dem Brennen als "totgebranntes" MgO vor. Solches MgO reagiert sehr langsam, in großen Teilen erst nach Jahren, mit Wasser, bildet dann aber Mg(OH)₂, welches ein größeres Volumen als MgO hat und daher den Zementstein zerstört. Auch als SCM darf Dolomit nicht immer verwendet werden, weil es sich zum Teil löst, dabei CO₂ freisetzt und unter bestimmten Umständen Mg(OH)₂ bildet. Das CO₂ bildet seinerseits aus Ca²⁺ Calcit. Diese Reaktionen führen ebenfalls zu einer Volumenänderung, welche zu einer Rissbildung und zur Zerstörung des Zementsteines führen kann.

Ein Ansatz zur Nutzbarmachung von Dolomit (und Kalkstein) ist ein Brennen zur direkten Verwendung als Luftkalk / Branntkalk / gelöschter Kalk oder als hydraulisches Bindemittel, z.B. als sog. Roman Cement. Verschiedene Autoren haben dazu die Reaktionsprodukte einer Kalzinierung von Tonen mit einem Gehalt an Kalkstein oder Dolomit bzw. von Gemischen aus Ton und Kalkstein bzw. Dolomit untersucht, wobei aber nur ein Einsatz der Produkte als hydraulisches Bindemittel oder die Herstellung von Keramik betrachtet wurden. Siehe A.L. Burwell, Mineral Report 28 in "The Henryhouse Marlstone in the Lawrence uplift, Pontotoc county, Oklahoma and its commercial possibilities" und M.J. Trindade et al, "Mineralogical transformations of calcareous rich clays with firing: A comparative study between calcite and dolomite rich clays from Algarve, Portugal", Applied Clay Science 42, (2009), S. 345-355. Eine Eignung als SCM wird in diesen Arbeiten nicht angesprochen und ist für die überwiegende Zahl der Produkte auch nicht sinnvoll, wie Vergleichsversuche gezeigt haben.

Eine weitere Studie zur Nutzbarmachung von Ton-Material von geringer Qualität als SCM beinhaltet auch ein MgO-reiches Rohmaterial, welches in Spuren Dolomit enthält, siehe G. Habert, "Clay content of argillites: Influence on cement based mortars", Applied Clay Science 43 (2009) 322. Der überwiegende MgO Anteil ist nicht im Dolomit gebunden, sondern liegt in Form von Tonmineralien (Palygorskite und Montmorillonit: ∑ 69%) vor. Nur ein geringer, rechnerischer Anteil von weniger als 1% MgO kann als Karbonat vorliegen, was einer maximalen Menge von 5% reinem Dolomit entspricht. Die Studie zeigt ebenfalls auf, dass Brenntemperaturen von über 800°C zu einer deutlichen Verringerung der Reaktivität führten bzw. das Material nur noch als inerter Füllstoff vorlag.

In GB 1438 A wird die Herstellung eines Puzzolans aus tonigen Materialien und kalkhaltigem Dolomit oder Magnesiummaterial vorgeschlagen. Das Material ist bei einer Temperatur zu brennen, bei der keine Sinterung stattfindet. Das Ausbleiben einer Sinterung bedeutet, dass die vorliegenden Verbindungen wie CaO, MgO oder das vorliegende Gemisch aus SiO₂ und Al₂O₃ (siehe auch Metakaolin) nicht weiter beziehungsweise miteinander reagieren dürfen. Dies wird benötigt, um die Kristallisation neuer komplexerer Phasen zu vermeiden und somit eine möglichst hohe Reaktivität des Materials zu gewährleisten. Durch einen Zusatz von Salzen wie Natriumchlorid soll eine Entkarbonatisierung ohne Sintern erfolgen, bei der künstliche Puzzolane erhalten werden. Das Verhältnis des kalkreichen, dolomitischen oder magnesiumreichen Materials zu der tonigen Komponente (argillaceous) soll Systemen der Romanzemente entsprechen. Der Tonanteil liegt somit laut gängiger Praxis und Definition bei 10% bis 15% beziehungsweise maximal bei unter 30%.

Eine weitere Studie (I. Barbane et al. 2013, "Low-temperature Hydraulic Binders for Restoration Needs", Material Science and Applied Chemistry, Vol. 28) beschreibt die Herstellung sowie die Materialeigenschaften eines hydraulischen Kalkes auf Basis von Dolomit und Ton. Das Ziel ist die Herstellung eines Systems mit maximaler Menge an Dolomit und möglichst geringen Gehalten an Ton. Die festigkeitsbildende Reaktion wird hauptsächlich der Hydratation von CaO und MgO, zur Umsetzung zu Ca(OH)₂ und Mg(OH)₂ und ebenfalls, aber in geringerem Umfang, einer puzzolanischen Reaktion zugeschrieben. Entsprechend diesem Dokument sind höhere Gehalte an Ton, und entsprechend geringere Gehalte an Dolomit oder Kalkstein, nicht anzustreben, da dies zu einer verringerten Festigkeitsentwicklung führen würde. Eine Kombination z.B. mit OPC wird nicht dargestellt und ist für den Fachmann ebenfalls nicht als vorteilhaft ersichtlich, da z.B. die Hydratation von OPC schon große Mengen an Ca(OH)₂ bereitstellt.

Eine weitere Studie (L. Lindina et al. 2006, "Formation of calcium containing minerals in the low temperature dolomite ceramics", Conference on Silicate Materials, Materials Science and Engineering, Vol. 25) beschreibt die Herstellung und den Einsatz eines hydraulischen Bindemittels basierend auf natürlichen Mischungen von Kalkstein, Dolomit und Ton. Die Studie zeigt, dass die optimale Brenntemperatur im Bereich um 750°C liegt. Schon bei 800°C kommt es zu einer deutlichen Verminderung der Reaktivität. Dem Fachmann erschließt sich hieraus, dass Brenntemperaturen von weniger als 800°C anzustreben sind. Eine Kombination z.B. mit OPC wird nicht dargestellt und ist für den Fachmann ebenfalls nicht als vorteilhaft ersichtlich.

In den genannten Studien werden Mischungen mit einer möglichst hohen Menge (mindestens mehr als 70%, typischerweise mehr als 80%) an Kalkstein bzw. in seltenen Fällen Dolomit und nur in geringen Mengen toniges Material (weniger als 30%, typischerweise weniger als 20%) verwendet. Das nach diesen Verfahren hergestellte Material führt in Kombinationen mit OPC nicht zu einer Verbesserung der Festigkeitsentwicklung.

Auch andere natürliche und künstliche Materialien, die wie Puzzolane Aluminiumsilikate enthalten, zeigen eine für die Verwendung als SCM (zu) geringe puzzolanische Reaktivität.

Aus der nicht vorveröffentlichten PCT/EP2015/002549 ist bekannt, dass durch ein gemeinsames Brennen mit Dolomit oder Magnesiumcarbonat-haltigen Materialien auch aus für andere Zwecke schlecht oder nicht geeignetem Ton, ton-haltigem Material und Puzzolanen von geringer Qualität reaktive SCM erhalten werden können. Die erhaltenen SCM zeigen jedoch häufig eine starke Braunbeziehungsweise Rotfärbung.

Typischerweise werden für Zement und Betonanwendungen Materialien mit einer gräulichen bis sogar weißen Farbgebung eingesetzt. Eine deutliche Verfärbung, wie zum Beispiel Rotfärbung durch kalzinierte Tone oder Blaufärbung bei hüttensandhaltigen Zementen wird oft als störend empfunden. Dies schließt den Einsatz in vielen Anwendungen aus. Es besteht daher weiterhin Bedarf an Materialien bzw. Verfahren zur Aktivierung von Aluminiumsilikaten, insbesondere von Ton und ton-haltigen Materialien und anderen Materialien von geringer puzzolanischer Qualität, so dass diese als SCM geeignet sind.

Überraschend wurde nun gefunden, dass durch ein gemeinsames Brennen mit Dolomit oder Magnesiumcarbonat-haltigen Materialien unter reduzierenden Bedingungen auch aus für andere Zwecke schlecht oder nicht geeignetem Ton, ton-haltigem Material und Puzzolanen von geringer Qualität reaktive SCM erhalten und eine Braun- beziehungsweise Rotfärbung vermieden werden können. Zusätzlich ergibt sich ein weiterer technischer Vorteil aus dem Fakt, dass die Zersetzung von Phasen unter reduzierenden Bedingungen bei noch geringeren Temperaturen stattfindet. Somit kann das Material noch energiesparender hergestellt werden.

Die Erfindung löst daher die obige Aufgabe durch ein Verfahren zur Herstellung von Klinkerersatzmaterial, bei dem ein Ausgangsmaterial, welches eine Aluminiumsilikat-Komponente und eine Dolomit-Komponente enthält, bereitgestellt und im Temperaturbereich von mehr als 700 °C bis maximal 1100 °C unter reduzierenden Bedingungen gebrannt wird. Die Aufgabe wird weiter durch ein Bindemittel gelöst, welches Zement und das erfindungsgemäße Klinkerersatzmaterial enthält. Ein weiterer Vorteil ergibt sich daraus, dass sich die zum Beispiel Wasser- sowie Karbonat-haltigen Phasen schon bei niedrigeren Temperaturen zersetzen und die freigesetzten Elemente zu neuen Produkten reagieren können, wenn diese unter reduzierenden Bedingungen gebrannt werden.

Erfindungsgemäß wird aus Aluminiumsilikat und Dolomit ein reaktives SCM erhalten, so dass zum einen qualitativ hochwertige Materialien noch weiter verbessert werden und als besonderer Vorteil ansonsten nicht oder nur schwer nutzbare Materialien vorteilhaft verwendet werden können. Das Ausgangsmaterial wird entweder von der Natur bereitgestellt oder gezielt durch Mischen und ggfs. gemeinsames Vermahlen erzeugt, im Temperaturbereich von >700 bis 1100 °C gebrannt, abgekühlt und ggfs. gemahlen.

Um die weitere Beschreibung zu vereinfachen, werden folgende in der Zementindustrie üblichen Abkürzungen verwendet: H - H₂O, C - CaO, A - Al₂O₃, F - Fe₂O₃, M - MgO, S - SiO₂ und $ - SO₃. Außerdem werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Ausgangsmaterials und der Art der Herstellung, durch die Substitution mit diversen Fremdionen variieren, wobei solche Verbindungen ebenfalls zum Gegenstand der vorliegenden Erfindung gehören und, falls nichts anderes angegeben ist, von den in reiner Form benannten Phasen umfasst sind.

Soweit nichts anderes angegeben ist, ist mit "reaktiv" eine hydraulische, latent-hydraulische oder puzzolanische Reaktivität gemeint. Ein Material ist hydraulisch reaktiv, wenn es in fein gemahlener Form nach Mischung mit Wasser durch Hydratation erhärtet, wobei das erhärtete Produkt seine Festigkeit und Dauerhaftigkeit an Luft und unter Wasser behält. Ein Material besitzt latent-hydraulische Reaktivität, wenn es nach Mischen mit Wasser in der Lage ist hydraulisch zu erhärten, aber für eine Umsetzung innerhalb technisch bzw. wirtschaftlich brauchbarer Zeit eine Anregung benötigt. Ein Material ist puzzolanisch reaktiv, wenn es nach Mischen mit Wasser bei Zimmertemperatur nur erhärten kann, wenn ein Anreger zugesetzt wird, beispielsweise ein Alkali- oder Calciumhydroxid. OH- greift das Al₂O₃-SiO₂-Netzwerk an, so dass Bindungen zwischen Sauerstoff und den Netzwerkatomen gelöst werden und Calciumsilikathydrate (C-S-H) oder Calciumaluminathydrate (C-A-H) als Festigkeits-bildende Phasen entstehen. Ein strenge Unterscheidung zwischen latent-hydraulischer und puzzolanischer Reaktivität erfolgt häufig nicht, da viele Materialien beide Reaktivitäten aufweisen.

Im Rahmen der vorliegenden Erfindung meint Klinker ein Sinterprodukt, welches durch Brennen eines Ausgangsmaterials bei erhöhter Temperatur erhalten wird und zumindest eine hydraulisch reaktive Phase enthält. Brennen meint die Aktivierung durch Veränderungen einer oder mehrerer der Eigenschaften Chemismus, Kristallinität, Phasenzusammensetzung, dreidimensionale Anordnung und Bindungsverhalten der Gerüstatome durch die Zufuhr von thermischer Energie. Das Ausgangsmaterial kann im Einzelfall auch ein einzelner Rohstoff sein, wenn dieser alle gewünschten Substanzen in der richtigen Relation enthält, das ist aber die Ausnahme. Das Ausgangsmaterial kann auch Mineralisatoren enthalten. Als Mineralisatoren werden Stoffe bezeichnet, welche als Flussmittel wirken und/oder die Temperatur senken, die zur Bildung einer Schmelze notwendig ist, und /oder solche, die die Bildung der Klinkerverbindung fördern, wie zum Beispiel durch Mischkristallbildung und/oder Phasenstabilisierung. Mineralisatoren können im Ausgangsmaterial als Bestandteil enthalten sein oder gezielt zugefügt werden.

Mit Zement wird ein mit oder ohne Zusatz weiterer Komponenten gemahlener Klinker bezeichnet, aber auch andere hydraulisch erhärtende Materialien und Mischungen, beispielsweise aber nicht ausschließlich Sulfathüttenzement, Geopolymerzement und durch hydrothermale Umsetzung erhaltener Belitzement. Bindemittel oder Bindemittelmischung bezeichnet ein in Kontakt mit Wasser hydraulisch erhärtendes Material, welches Zement enthält und typischerweise aber nicht zwingend weitere, fein gemahlene Komponenten. Das Bindemittel gelangt nach Zusatz von Wasser, meist auch Gesteinskörnung und ggfs. Zusatzmitteln, zur Anwendung.

Klinkerersatzmaterial oder SCM bezeichnet ein puzzolanisches und/oder latent-hydraulisches Material, das in einem Zement bzw. einem Bindemittel zumindest einen Teil des Klinkers ersetzt. Latent-hydraulische Materialien weisen eine Zusammensetzung auf, die in Kontakt mit Wasser eine hydraulische Erhärtung ermöglicht, wobei typischerweise für eine Erhärtung in technisch nutzbaren Zeiträumen ein Anreger nötig ist. Mit Anreger oder Aktivator ist ein Material gemeint, welches die Erhärtung von latent-hydraulischen Materialien beschleunigt. Es kann sich um einen Zusatz handeln, etwa Sulfat oder Calcium(hydr)oxid und/oder um Produkte der hydraulischen Reaktion des Zements, z.B. setzen Calciumsilkate bei der Erhärtung Calciumhydroxid frei, welches als Anreger wirkt. Im Unterschied dazu sind Puzzolane oder puzzolanische Materialien natürliche oder industriell hergestellte Stoffe, wie z.B. kalkarme Flugaschen, die reaktives SiO₂ alleine oder auch zusammen mit Al₂O₃ und/oder Fe₂O₃ enthalten, aber nicht selbstständig mit Wasser durch Bildung von Calcium(aluminium)silikathydrat- und/oder Calciumaluminat(ferrat)phasen erhärten können. Puzzolane enthalten entweder kein oder nur sehr wenig CaO. Sie benötigen deshalb, im Gegensatz zu den latent-hydraulischen Materialien, für ein hydraulisches, auf der Bildung von Calciumsilicathydraten beruhendes Erhärten, zwingend einen Zusatz von CaO oder Ca(OH)₂. Das Klinkerersatzmaterial oder SCM kann auch ein von sich aus hydraulisches Material darstellen, wenn dieses in ausreichenden Mengen Freikalk und Periklas und/oder reaktive Klinkerphasen zusammen mit puzzolanischem und oder latent-hydraulischen Materialien enthält. In der Praxis ist die Grenze zwischen hydraulischen, latent-hydraulischen und puzzolanischen Materialien oft fließend, z.B. können Flugaschen je nach Mineralogie und Gehalt an Calciumoxid puzzolanische oder latent-hydraulische bis hin zu hydraulischen Materialien sein. Mit SCM sind sowohl latent-hydraulische als auch puzzolanische Materialien gemeint. Von den SCM zu unterschieden sind unreaktive, mineralische Zusätze, wie Gesteinsmehl, welche an der hydraulischen Umsetzung des Bindemittels keinen Anteil haben. In der Literatur werden teilweise SCM gemeinsam mit solchen Zusätzen als mineralische Zusätze zusammengefasst.

Ein Klinker kann bereits alle notwendigen bzw. gewünschten Phasen enthalten und nach Vermahlen zu Zement direkt als Bindemittel zum Einsatz kommen. Häufig wird die Zusammensetzung des Bindemittels durch Vermischen von Zement und weiteren Komponenten, erfindungsgemäß zumindest dem Klinkerersatzmaterial, erhalten und auch zwei oder mehrere Klinker und/oder Zemente sind möglich. Das Vermischen erfolgt bereits vor (oder während) dem Mahlen und/oder im gemahlenen Zustand und/oder bei der Herstellung des Bindemittels. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Erfindungsgemäß wird ein SCM durch Brennen der Mischung enthaltend Aluminiumsilikat sowie Dolomit erhalten. Dabei wird auch aus sonst nicht oder schlecht verwendbaren Materialien, die bisher als Baumaterial kaum nutzbar waren, ein (sehr) reaktives SCM erhalten oder sogar ein Klinker generiert. Durch den Ersatz von Zementklinker werden Rohstoffe für diesen und vor allem Energie gespart, da die erfindungsgemäßen SCM geringere Brenntemperaturen als Zementklinker für Portlandzement oder Calciumsulfoaluminatzement benötigen.

Ein weiterer überraschender Vorteil ist die rasche Umsetzung des im erfindungsgemäßen SCM enthaltenen MgO. Eine vollständige Hydratation von MgO findet meistens innerhalb der ersten 1 bis 7 Tage statt, wobei spätestens nach 28 Tagen kein MgO bzw. nur noch Spuren (< 1 %) nachweisbar sind. Das Material kann ebenfalls so eingestellt werden, dass das autogene Schwinden zumindest teilweise durch die Umwandlung und Volumenzunahme von MgO zu Mg(OH)₂ kompensiert und ein potentielles Auftreten von Schwindrissen minimiert bzw. vermieden wird. Dieser Prozess tritt in den ersten Tagen der Hydratation auf und ist spätestens mit dem vollständigen Umsatz von MgO abgeschlossen.

Das Ausgangsmaterial soll, glühverlustfrei gerechnet, vorzugsweise mindestens 5 Gew.-% MgO und mindestens 8 Gew.-% Al₂O₃ enthalten. Besonders bevorzugt sind mindestens 7 Gew.-% MgO, insbesondere mindestens 10 Gew.-% MgO und am meisten bevorzugt mindestens 12 Gew.-% MgO enthalten, wobei der (Haupt-)Anteil des MgO aus der Dolomit-Komponente stammt, d.h. als Karbonat vorliegen soll. Mindestens sind 8 Gew.-% Al₂O₃, bevorzugt sind mindestens 15 Gew.-% Al₂O₃, insbesondere mindestens 20 Gew.-% Al₂O₃ enthalten. Außerdem sollten mindestens 15 Gew.-% SiO₂, bevorzugt mindestens 25 Gew.-% SiO₂ und insbesondere mindestens 40 Gew.-% SiO₂ enthalten sein. Glühverlustfrei bezeichnet Proben, die bei 1050 °C kalziniert wurden. Mit glühverlustfrei gerechneter Anteil ist der Anteil gemeint, der sich ergäbe, wenn bei 1050 °C kalzinierte Materialien eingesetzt würden.

Der Einfachheit halber wird von Ausgangsmaterial gesprochen, wobei dieser Begriff sowohl durch Mischen erzeugte Materialien umfasst als auch Materialien, die von sich aus die gewünschten Bestandteile in den benötigten Mengen enthalten. Sofern ein Ausgangsmaterial nicht die gewünschten Mengen MgO, Al₂O₃ und SiO₂ enthält, wird eine Mischung verwendet. In der Regel sind Ausgangsmaterialien, die 40 bis 80 Gew.-%, vorzugsweise 50 bis 70 Gew.-% und insbesondere 55 bis 65 Gew.-% Aluminiumsilikat-Komponente sowie von 20 bis 60 Gew.-%, vorzugsweise 30 bis 50 Gew.-% und insbesondere 35 bis 45 Gew.-% Dolomit-Komponente enthalten gut geeignet.

Das Gewichtsverhältnis von Al₂O₃+SiO₂ zu MgO+CaO des Ausgangsmaterials liegt vorzugsweise im Bereich von 0,7 bis 6, bevorzugt im Bereich von 1,1 bis 4 und insbesondere im Bereich von 1,5 bis 2,9. Mit anderen Worten, im Gegensatz zu den für RomanCement genutzten Rohstoffgemischen, die in der Regel Rohstoffe mit einem Gewichtsverhältnis Al₂O₃+SiO₂ zu CaO(+MgO) von < 0,5 nutzen, sollte für das erfindungsgemäße Verfahren im Ausgangsmaterial bevorzugt mehr Aluminiumsilikat als Dolomit vorliegen.

Im Rahmen der vorliegenden Erfindung meint Dolomit-Komponente ein Material, welches Calciummagnesiumcarbonat (CaMg(CO₃)₂) enthält. Geeignet sind Materialien mit einem Gehalt an Calciummagnesiumcarbonat von mindestens 20 Gew.-%, insbesondere über 50 Gew.-% und am meisten bevorzugt über 80 Gew.-%. Somit sind die Carbonatgesteine Dolomit und dolomitischer Kalkstein besonders bevorzugt. Des weiteren kann die Dolomit-Komponente andere Karbonate wie z.B. Magnesit, Barringtonit, Nesquehonit, Lansfordit, Hydromagnesit, Calcit, Vaterit, Ankerit, Huntit und Aragonit enthalten. Als Dolomit-Komponente eignen sich alle Materialien natürlichen oder künstlichen Ursprungs, die Calciummagnesiumcarbonat in geeigneter Menge enthalten. Bevorzugt sind dabei neben Calciummagnesiumcarbont solche Mg- und/oder Ca-haltigen Carbonate, die sich im Temperaturbereich von 600 bis 1000 °C, bevorzugt von 700 bis 950 °C, umsetzen.

Dabei ist es besonders günstig, wenn die Zersetzungs- bzw. Umsetzungstemperatur der Dolomit-Komponente mit der der Aluminiumsilikat-Komponente abgestimmt wird. Es ist also günstig, wenn die Zersetzungs- bzw. Umsetzungstemperaturen etwa im gleichen Bereich liegen. Beispielsweise sollte die Zersetzung/Umsetzung der Dolomit-Komponente bei derselben Temperatur oder um bis zu 50 °C höher oder vorzugsweise tiefer als die der Aluminiumsilikat-Komponente erfolgen.

Aluminiumsilikat bezeichnet im Rahmen der Erfindung Minerale und synthetische Materialien, die Al₂O₃ und SiO₂ enthalten. Als Aluminiumsilikat-Komponente eignen sich Mineralien, natürliche Neben- und Abfallprodukte, aber auch industrielle Neben- und Abfallprodukte, die in ausreichenden Mengen SiO₂ und Al₂O₃ zur Verfügung stellen und zumindest teilweise hydratisiert und/oder karbonatisiert vorliegen. Die Aluminiumsilikat-Komponente sollte glühverlustfrei gerechnet mehr als 12 Gew.-% Al₂O₃, bevorzugt mindestens 20 Gew.-% Al₂O₃, insbesondere mindestens 30 Gew.-% Al₂O₃, enthalten sowie von 25 bis 65 Gew.-% SiO₂, bevorzugt von 35 bis 55 Gew.-% SiO₂ und insbesondere von 40 und 50 Gew.-% SiO₂. Glühverlustfrei bezeichnet Proben, die bei 1050 °C kalziniert wurden. Die Aluminiumsilikat-Komponente enthält typischerweise Vertreter verschiedener Minerale, wie zum Beispiel, aber nicht ausschließlich, aus der Gruppe der Tone, Glimmer, Amphibole, Serpentine, Karpholithe, Staurolithe, Zeolithe, Allophane, Topase, Feldspäte, Al- und Fe-enthaltender Hydroxide und anderer natürlicher Puzzolane, Laterite und Saprolithe. Es können auch Aluminiumsilikat-Komponenten mit mehr als 40 Gew.-% Al₂O₃ eingesetzt werden. Besonders bevorzugt werden Materialen geringer Qualität verwendet, d.h. solche, die für andere Einsatzzwecke (wie z.B. als SCM "kalzinierter Ton" hergestellt entsprechend dem aktuellen Stand der Technik) nicht oder schlecht geeignet sind. Material von geringer Qualität bezeichnet Aluminiumsilikate, wie Puzzolane und Tone, die durch einen Brennprozess nicht in ausreichendem Maße aktiviert werden können um z.B. den Qualitätsanforderungen wie sie z. B. für Flugaschen in EN 450-1 definiert sind, zu genügen. Des weiteren sind unter Material geringer Qualität solche Materialien zu verstehen, die aus komplexen Mineralmischungen bestehen, wobei zum Beispiel Phasen mit deutlich unterschiedlichen optimalen Kalzinierungstemperaturen nebeneinander vorliegen. Diese Materialien sind oft ein Gemenge von Phasen, wie z.B. verschiedenen Tonmineralen, Glimmern und z.B., aber nicht ausschließlich, anderen natürlichen Aluminiumsilikaten und -hydroxiden, mit zum Teil sehr unterschiedlichen optimalen Temperaturen für das Kalzinieren. Gegebenenfalls können auch synthetische Ausgangsstoffe eingesetzt werden, insofern diese vergleichbare Zusammensetzungen und Eigenschaften aufweisen. Außerdem wurde überraschenderweise gefunden, dass auch für Materialien ausreichender Qualität (Materialien, die von sich aus oder aber durch thermische Behandlung im Temperaturbereich von 600 bis 900°C reaktive Puzzolane darstellen und somit den Anforderungskriterien, wie sie z.B. in der EN 450-1 für Flugaschen definiert sind, genügen) die Reaktivität durch das erfindungsgemäße Verfahren verbessert werden kann.

Ton und Ton-haltige Materialien sind als Aluminiumsilikat-Komponente besonders bevorzugt. Mit Ton und Ton-haltige Materialien sind im Rahmen der Erfindung Materialien gemeint, welche vorrangig Tonminerale enthalten, d.h. Schichtsilikate mit Schichten aus SiO₄-Tetraedern und Schichten aus AlO₆-Oktaedern. Die Tetraeder- sowie Oktaederschichten weisen üblicherweise weitere Elemente auf, die Si und oder Al teilweise substituieren. In der Regel handelt es sich bei den Tonen und Ton-haltigen Materialien um feinkörnige bis feinstkörnige Materialien mit Partikelgrößen unter 4 µm oder unter 2 µm oder unter 1 µm. Im Rahmen der Erfindung ist das jedoch nicht zwingend, es können auch chemischmineralogisch gleiche Materialien mit größeren Partikelgrößen verwendet werden. Tone können weitere Materialien enthalten und Ton-haltige Materialien enthalten solche. Von der Erfindung profitieren insbesondere solche Tone, Ton-haltige Materialien und synthetische Materialien analogen Aufbaus, die sehr verschiedene Phasen enthalten und von sich aus nicht oder zu wenig reaktiv sind.

Als Ausgangsmaterial kommen neben Gemischen von Aluminiumsilikat-Komponente und Dolomit-Komponente wie oben beschrieben außerdem Mergel (Mischungen aus Ton und Kalkstein/Dolomit) in Betracht. Soweit diese einen ausreichenden Gehalt an MgO, gebunden als Karbonat, aufweisen, sind sie als alleiniger Rohstoff geeignet. Mergel mit hohem Gehalt an CaO sollten dagegen nur in geringen Mengen eingesetzt werden, damit der Gehalt an CaO im Ausgangsmaterial, glühverlustfrei gerechnet, möglichst gering ist. Bevorzugt sind maximal 40 Gew.-%, insbesondere weniger als 30 Gew.-% und besonderes bevorzugt weniger als 20 Gew.-%.

Ohne an diese Theorie gebunden sein zu wollen wird angenommen, dass Dolomit und analog zusammengesetzte Materialien beim Kalzinieren unter reduzierenden Bedingungen schon bei niedrigeren Temperaturen als z.B. Kalkstein zersetzt werden und dadurch aus Silizium sowie Aluminium reaktive Silikate und Aluminate gebildet werden können, so dass sich keine oder weniger inerte, kristalline Phasen, wie z.B. Mullit, bilden.

Die Temperatur beim Brennen beträgt von >700 bis 1100 °C, bevorzugt wird die Mischung bei 825 bis 1000 °C gebrannt, besonders bevorzugt bei 850 bis 975 °C. Im Gegensatz zum Kalzinieren von Tonen entsprechend dem Stand der Technik (setzt zwingend die Einhaltung eines engen Temperaturbereiches voraus), können sehr weite Temperaturbereiche, unter anderem auch sehr hohe Temperaturen (> 900°C), genutzt werden. Das SCM zeigt auch bei diesen hohen Temperaturen noch eine sehr hohe und überraschenderweise zum Teil die höchste Reaktivität.

Das Ausgangsmaterial kann vor dem Brennen wenn nötig zerkleinert und im Falle von Ausgangsmaterialmischungen gut gemischt werden, beispielsweise durch gemeinsames Mahlen. Es ist aber auch möglich nur gebrochenes Material einzusetzen. Als vorteilhaft hat sich eine Ausgangsmaterialfeinheit von 2000 bis 10000 cm²/g (Blaine), vorzugsweise von 3000 bis 7000 cm²/g erwiesen. Gut geeignete Partikelgrößen (Lasergranulometrie) lagen im Bereich von einem d₉₀ < 200µm, vorzugsweise d₉₀ < 100µm und besonders bevorzugt d₉₀ < 60µm. Wie jeder Fachmann versteht, erlauben höhere Feinheiten eine effektivere Kalzinierung (z.B. verringerte Brenntemperatur und/oder verringerte Verweildauer und ein erhöhter Phasenumsatz). Jedoch ist die Mahlung von solch komplexen Mischungen (sehr weiche Materialien (z.B. Ton) mit sehr harten Materialien (z.B. Quarz)) sehr schwierig und oft führt dies ebenfalls zu Problemen beim Einsatz als SCM, durch z.B. den deutlich erhöhten Wasseranspruch. Ein besonderer Vorteil der Erfindung ist die deutlich erhöhte Flexibilität hin zu höheren Temperaturen. Selbst (sehr) grobes Material wird ausreichend umgesetzt und durch die hohen Brenntemperaturen (z.B. > 900°C) wird die spezifische Oberfläche, und entsprechend der Wasseranspruch, deutlich reduziert.

Zum Brennen eignen sich alle üblichen Vorrichtungen, wie zum Beispiel, aber nicht ausschließlich, direkt oder indirekt befeuerte Drehrohröfen, Fließbett- oder Wirbelschichtreaktor, Schacht- und Etagenöfen und sogenannte Flash Calciner.

Erfindungsgemäß ist während des Brennes eine reduzierende Atmosphäre einzustellen. Grundlegend sind alle Maßnahmen zur Einstellung einer reduzierenden Ofenatmosphäre geeignet. Die reduzierende Atmosphäre kann zum Beispiel, aber nicht auschließlich, durch Zugabe von Kohlenstoff, Kohlenmonoxid, organischen Verbindungen, Ammoniak, Schwefel, Methan oder anderen Gasen der Kohlenwasserstoffgruppe erreicht werden. Auch prozesstechnisch lassen sich durch eine entsprechend gewählte Menge Brennstoffe und/oder die Minimierung des Sauerstoffeintrages reduzierende Bedingungen einstellen. Es ist ebenfalls möglich, dass dass Ausgangsmaterial schon Komponenten, wie zum Beispiel Sulfide oder organische Verbindungen, enthält, welche beim Brennvorgang eine reduzierende Atmosphäre erzeugen.

Als Brennstoff eignen sich zum Beispiel Öl, Kohle, Bitumen-haltige Kohle, Braun- und Steinkohle, Erdgas und synthetisches Erdgas, Lösemittel und insbesondere Lösemittelabfälle, getrockneter Klärschlamm oder Entwässerungsschlamm, Papierschlamm, Anodenstaub, Ölfilterpapier, Ölschlamm, Ölabfälle, geschredderte Autoteile, Reifen, geschredderte Reifen oder Reifenschnitzel, Textilschnitzel, Papiergranulat, Böden, verunreinigte Böden und Mischungen davon, Sekundärbrennstoffe aus der Abfallwirtschaft z.B. Kunstoffabfall, Sekundärbrennstoffe aus der Aggrarwirtschaft z.B. Reisschalen, Palmkernöl oder -schalen, Zuckerrohrbagasse, Kokosnussschalen, Sheanussschalen, Tierfutter, Tierfett, Hirsehülsen, Maishülsen. In der Praxis werden zumeist Mischungen von oder mehreren der genannten Brennstoffe eingesetzt.

Die Umsetzung, in z.B. aber nicht ausschließlich Drehrohröfen oder Schacht- und Etagenöfen, benötigt typischerweise 5 bis 240 Minuten, bevorzugt 25 bis 120 Minuten und insbesondere 40 bis 75 Minuten und soll auf die Vorrichtung, die Brenntemperatur und die gewünschten Produkteigenschaften angepasst werden. Bei höheren Temperaturen können auch kürzere Zeiten von Vorteil sein, wenn z.B. größtenteils Phasen vorliegen, welche schon bei niedrigen Temperaturen zerstört werden (z.B. Kaolinit).

Die Umsetzung in z.B. aber nicht ausschließlich Fließbett- oder Wirbelschichtreaktoren oder Flash Calcinern benötigt typischerweise 5 bis 300 Sekunden, bevorzugt 10 bis 150 Sekunden und insbesondere 20 bis 100 Sekunden und soll an die Vorrichtung, die Brenntemperatur und die gewünschten Produkteigenschaften angepasst werden.

Es ist möglich, die benötigte Temperatur zu weiter senken, indem man einen oder mehrere Mineralisatoren, beispielsweise aber nicht ausschließlich Borax, Glasabfälle, Eisensalze (z.B. Sulfate, Hydroxide, Carbonate, Fluoride, Nitrate oder Mischungen davon), Alkalisalze (z.B. Sulfate, Hydroxide, (Hydrogen-)Carbonate, Fluoride oder Mischungen davon) und/oder Erdalkalisalze (z.B. Sulfate, Hydroxide, (Hydrogen-)Carbonate, Fluoride oder Mischungen davon), zufügt. Die anzuwendende Temperatur liegt dann im Bereich von 625 bis 950 °C, vorzugsweise von 675 bis 900 °C, insbesondere von 800 bis 875 °C. Gegebenenfalls können entsprechende Verbindungen, wie zum Beispiel Calciumsulfate (z.B. als Anhydrit oder Gips) und/oder Alkalisalze, auch schon in dem Ausgangsmaterial vorliegen.

Die Mineralisatoren werden so gewählt, dass sie die Bildung von reaktiven Phasen fördern. Dazu gehören Klinkerphasen wie NyC_{4-y}A₃₋ₓFₓ$, CA, C₁₂A₇, C₃A, C₂S; reaktive (Calcium)Alkalisulfate wie K₂Ca₂(SO₄)₃, K₂SO₄, Na₂Ca(SO₄)₂, Na₂SO₄, K₃Na(SO₄)₂ und Calciumsulfat; sowie inerte, Magnesiumhaltige Minerale in denen Magnesiumoxid (freigesetzt bei der Dolomitzersetzung) gebunden wird, wie Magnesium(Aluminium, Eisen)silikate (z.B. Forsterit, Enstatit, Spinell, etc.).

Ein erfindungsgemäß wichtiger Effekt des Brennens, vor allem bei Temperaturen über 700°C, vorzugsweise über 800°C, ist eine starke Verringerung der Oberfläche der Aluminiumsilikat-Komponente. Durch das Brennen reduziert sich die spezifische Oberfläche (gemessene BET in m²/g) der Aluminiumsilikat-Komponente um mindestens 15%, vorzugsweise um mindestens 20% und insbesondere um 30%. Häufig werden 40% oder 50% Reduktion erreicht, teilweise noch mehr. Durch die Verringerung der Oberfläche wird die Ad-beziehungsweise Absorption von Wasser und Zusatzmitteln gesenkt. Damit sinkt der Wasseranspruch, d.h. die zur Einstellung der gewünschten Fließfähigkeit notwendige Menge Wasser, und die benötigten Mengen Zusatzmittel.

Nach dem Brennen wird das erhaltene Klinkerersatzmaterial typischerweise gekühlt. Eine schnelle Abkühlung kann vorgenommen werden, um z.B. eine Phasenumwandlung bzw. Auskristallisation zu vermeiden. Eine schnelle Kühlung ist normalerweise nicht zwingend notwendig.

Es ist ein großer Vorteil, dass das erfindungsgemäße Material eine im wesentlichen graue Färbung aufweist, also weder stark rot noch stark blau gefärbt ist. Die experimentell gefundenen Farbwerte nach dem CIE Lab System liegen in der Regel bei L von 30 bis 80, a von 0 bis 10 und b von 0 bis 30. Besonders wichtig ist der a Wert, der vorzugsweise von 0 bis maximal 5 und insbesondere etwa 0 betragen sollte.

Das Klinkerersatzmaterial wird zur Verwendung in der Regel auf eine Feinheit von 2000 bis 10000 cm²/g (Blaine), vorzugsweise 3500 bis 8000 cm²/g, und besonders bevorzugt von 3500 bis 8000 cm²/g, gemahlen. Die Mahlung kann separat oder zusammen mit den anderen Zement- und Bindemittelkomponenten erfolgen. Als besonderes geeignet hat sich die gemeinsame Vermahlung erwiesen.

Die spezifische Oberfläche des gemahlenen Klinkerersatzmaterials liegt typischerweise bei einem d₉₀ < 150 µm, bevorzugt bei einem d₉₀ < 90 µm und besonderes bevorzugt bei einem d₉₀ < 60 µm.

Das finale Bindemittel liegt, entsprechend der Herstellung, in typischen Zementfeinheiten vor.

Bei der Mahlung der Rohmehlmischung und/oder des Klinkerersatzmaterials werden vorzugsweise Mahlhilfsmittel verwendet. Die Mahlhilfsmittel sind vorzugsweise, aber nicht ausschließlich, ausgewählt aus der Gruppe der Glykole und Alkanolamine, insbesondere aber nicht ausschließlich Diethanolisopropanolamin (DEIPA), Triisopropanolamin (TIPA), und/oder Triethanolamin (TEA) aber auch aus der Gruppe der Alkyldialkanolamine wie z.B. Methyldiisopropanolamin oder auch Mischungen dieser.

Das erfindungsgemäße Klinkerersatzmaterial kann - wie beispielsweise Flugasche und Hüttensand - als SCM genutzt werden.

Dazu wird es mit Zement zu einem Bindemittel kombiniert. Klinkerersatzmaterial und Zement können getrennt oder gemeinsam, mit oder ohne Sulfat gemahlen werden. Das Bindemittel kann außerdem Zusatzmittel und/oder Zusatzstoffe enthalten, die an sich bekannt sind und in den üblichen Mengen eingesetzt werden.

Als Zement kommen vor allem Portlandzement und Calciumsulfoaluminatzement in Betracht. Des weiteren kann Calciumaluminatzement eingesetzt werden. Der Einsatz von so genannten Geopolymerzementen hat wirtschaftlich wenig Sinn. Portlandzement, auch als OPC bezeichnet, umfasst in der Regel von 50 bis 70 Gew.-% C₃S, von 10 bis 40 Gew.-% C₂S, von 0 bis 15 Gew.-% C₃A, von 0 bis 20 Gew.-% C₄AF, von 2 bis 10 Gew.-% C$·xH, von 0 bis 3 Gew.-% C und von 0 bis 5 Gew.-% Cc (CaCO₃). Die chemische Zusammensetzung ist in der Regel 55 - 75 Gew.-% CaO, 15 - 25 Gew.-% SiO₂, 2 - 6 Gew.-% Al₂O₃, 0 - 6 Gew.-% Fe₂O₃ und 1,5 - 4,5 Gew.-% SO₃. Calciumsulfoaluminatzement, auch als CSA oder C$A bezeichnet, enthält in der Regel von 10 - 75 Gew.-% C₄A₃$, von 5 - 30 Gew.-% C$, von 0 - 30 Gew.-% C₄AF, von 0 - 30 Gew.-% Calciumaluminate und von 2 - 70 Gew.-% C₂S und/oder C₅S₂$. Je nach Rohstoffmischung und Herstellungsbedingungen können gezielt Varianten erhalten werden, wie Belit-Calciumsulfoaluminatzement (kurz BCSA oder BCSAF) mit erhöhtem Belitgehalt von mindestens 10 oder 20 Gew.-% und Ternesit(Belit)-Calciumsulfoaluminatzement (kurz T(B)CSA oder T(B)CSAF) mit einem Gehalt von 5 bis über 50 Gew.-% C₅S₂$.

Es hat sich bewährt in dem Bindemittel von 1 bis 90 Gew.-%, vorzugsweise von 10 bis 70 Gew.-% und insbesondere von 20 bis 50 Gew.-% Zement und von 10 bis 99 Gew.-%, vorzugsweise von 30 bis 90 Gew.-% und insbesondere von 50 bis 80 Gew.-% erfindungsgemäßes SCM einzusetzen. Daneben enthält das Bindemittel bevorzugt bis zu 10 Gew.-%, besonders bevorzugt von 1 bis 7 Gew.-% und insbesondere von 2 bis 5 Gew.-% Sulfatträger. Der Sulfatträger kann gegebenenfalls auch schon ganz oder teilweise im erfindungsgemäß produzierten SCM vorliegen.

Bei dem Sulfatträger handelt es sich vorzugsweise überwiegend oder ausschließlich um Calciumsulfat oder eine Mischungen von Calciumsulfaten.

Außerdem können dem Bindemittel, vorzugsweise bei der Verarbeitung, Zusatzmittel in den an sich bekannten Mengen oder im Hinblick auf die noch verblebende Ad- bzw. Absorption in diese ausgleichenden Mengen zugegeben werden.

Beispielsweise können ein oder mehrere Abbinde- und/oder Erhärtungsbeschleuniger, vorzugsweise ausgewählt unter Aluminiumsalzen und -hydroxiden, Calcium(sulfo)aluminaten, Lithiumsalzen und -hydroxiden, anderen Alkalisalzen und -hydroxiden, Alkalisilikaten und Gemischen davon, enthalten sein, insbesondere ausgewählt unter Al₂(SO)₃, AlOOH, Al(OH)₃, Al(NO₃)₃, CaAl₂O₄, Ca₁₂A_{I14}O₃₃, Ca₃Al₂O₆, Ca₄Al₆O₁₂(SO₄), LiOH, Li₂CO₃, LiCl, NaOH, Na₂CO₃, K₂Ca₂(SO₄)₃, K₃Na(SO₄)₂, Na₂Ca(SO₄)₃, K₃Na(SO₄)₂, K₂Ca(SO₄)₂*H₂O, Li₂SO₄, Na₂SO₄, K₂SO₄, KOH und Wasserglas. Abbinde- und/oder Erhärtungsbeschleuniger auf Basis von Alkalisulfaten können gegebenenfalls auch schon (teilweise) im erfindungsgemäß produzierten SCM vorliegen.

Es ist weiter bevorzugt, wenn Betonverflüssiger und / oder Fließmittel und/oder Verzögerer enthalten sind. Geeignet sind beispielsweise solche auf Basis von Ligninsulfonaten; sulfoniertem Naphthalin-, Melamin- oder Phenolformaldehydkondensat; oder auf Basis von Acrylsäure-Acrylamidgemischen oder Polycarboxylatethern oder auf Basis von phosphatierten Polykondensaten; auf Basis von phosphatierten Alkylcarbonsäuren und Salzen dieser; auf Basis von (Hydroxy-)Carbonsäuren und Carboxylaten, insbesondere Citronensäure, Citraten, Weinsäure, Tartraten; Borax, Borsäure und Boraten, Oxalaten; Sulfanilsäure; Aminocarbonsäuren; Salicylsäure und Acetylsalicylsäure; Dialdehyden und Gemische davon.

Das Bindemittel kann weiterhin Zusatzstoffe, z.B. Gesteinsmehl, insbesondere Kalkstein und/oder Dolomit, gefälltes (Nano) CaCO₃, Magnesit, Pigmente, Fasern usw., enthalten. Ebenso können zusätzlich an sich bekannte SCM, insbesondere Hüttensand, Flugasche, SiO₂ in Form von Silikastaub, Mikrosilica, pyrogener Kieselsäure etc., enthalten sein. Die Menge dieser Zusätze beträgt insgesamt bevorzugt maximal 40 Gew.-%, vorzugsweise 5 bis 30 Gew.-% und besonders bevorzugt 10 bis 20 Gew.-%.

Es versteht sich, dass die Summe aller Komponenten in einer Mischung, z.B. in einem Bindemittel oder einem Ausgangsmaterial, stets 100 Gew.-% beträgt.

Es ist auch möglich, das Klinkerersatzmaterial mit einem Aktivator zu einem Zement zu kombinieren, wenn es latent-hydraulische Eigenschaften besitzt. Analog zu Hüttensand kann das Klinkerersatzmaterial bei Aktivierung seiner latent-hydraulischen Eigenschaften wie Zement hydraulisch erhärten.

Im Unterschied zu den als Roman Cement bekannten Bindemitteln zielt das erfindungsgemäße Klinkerersatzmaterial auf Aluminium- und/oder Siliziumhaltige Erhärtungsphasen. Als Aktivator sind demgemäß Aluminium und/oder Silizium freisetzende Komponenten sinnvoll, beispielsweise aber nicht ausschließlich Al₂(SO₄)₃, Al(OH)₃ und Calciumaluminate wie CA, C₃A und C₁₂A₇, und außerdem Nano- oder Microsilica, Wasserglas und Mischungen davon.

Der Aktivator oder die Aktivatoren werden in Mengen im Bereich von 0,1 bis 5 Gew.-%, vorzugsweise 0,5 bis 3 Gew.-% und besonders bevorzugt 1 bis 2 Gew.-%, bezogen auf die Menge von dem Klinkerersatzmaterial eingesetzt.

Auch bei einem solchen Bindemittel aus Klinkerersatzmaterial und Aktivator können in an sich bekannter Weise, wie oben beschrieben, Zusatzmittel und Zusatzstoffe eingesetzt werden.

Darüber hinaus kann auch bei den erfindungsgemäßen Bindemitteln enthaltend Zement und das erfindungsgemäße Klinkerersatzmaterial bei Bedarf ein Aktivator der oben beschriebenen Art und auch Menge zugefügt werden, um eine beschleunigte Reaktion zu erzielen.

Aus den Bindemitteln lassen sich Baumaterialien wie Beton, Mörtel, Estrich, bauchemische Zusammensetzungen (z.B. Fliesenkleber, ...) erhalten. Es ist ein Vorteil der Erfindung, dass erfindungsgemäß hergestelltes Klinkerersatzmaterial sehr reaktiv ist, die Baumaterialien haben vergleichbare Eigenschaften, wie solche aus Portlandzement.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung soll anhand der folgenden Beispiele erläutert werden, ohne jedoch auf die speziell beschriebenen Ausführungsformen beschränkt zu sein.

In den Beispielen wurde ein Ton als Aluminiumsilikat-Komponente verwendet und allein oder unter Zugabe von Dolomit bei verschiedenen Temperaturen gebrannt. Zur Bestimmung der Reaktivität wurden die Produkte als SCM eingesetzt. Dazu wurden Bindemittel, die 56,5 Gew.-% Portlandzementklinker (OPC), 3,5 Gew.-% Anhydrit und 40 Gew.-% eines Klinkerersatzmaterials oder zum Vergleich 40 Gew.-% Kalkstein enthielten hergestellt und die Druckfestigkeit wurde nach 7 und 28 Tagen gemäß EN 196 bestimmt. Abweichend von der Norm wurde das Bindemittel mit einem Feinsand im Verhältnis 2:3 gemischt und es wurde ein Wasserzementwert von 0,55 verwendet. Die Messung der Druckfestigkeit erfolgte an Würfeln mit einer Kantenlänge von 20 mm und einer Vorschubgeschwindigkeit von 400 N/s. Alle Klinkerersatzmaterialien und der Kalkstein wurden mit derselben Mahlenergie gemahlen, um die Ergebnisse vergleichbar zu machen. Die Verarbeitbarkeit (Fließeigenschaften und Wasseranspruch) war bei allen Klinkerersatzmaterialien vergleichbar.

Die Ausgangsmaterialien hatten die in der folgenden Tabelle 1 angegebene Oxidzusammensetzung (GV 1050 = Glühverlust bei 1050°C):

**Tabelle 1**

| | **Anhydrit** | **Klinker** | **Kalkstein** | **Dolomit** | **Ton** |
|---|---|---|---|---|---|
| GV 1050 | 3,68 | 0,29 | 42,57 | 46,73 | 12,94 |
| SiO₂ | 2,04 | 20,86 | 1,75 | 0,18 | 47,73 |
| Al₂O₃ | 0,60 | 4,88 | 0,46 | 0,07 | 28,86 |
| TiO₂ | 0,03 | 0,37 | 0,02 | 0,00 | 1,04 |
| MnO | 0,00 | 0,05 | 0,02 | 0,00 | 0,00 |
| Fe₂O₃ | 0,23 | 3,67 | 0,20 | 0,03 | 8,15 |
| CaO | 38,32 | 63,52 | 53,93 | 32,71 | 0,03 |
| MgO | 1,45 | 2,57 | 0,55 | 18,99 | 0,26 |
| K₂O | 0,16 | 1,09 | 0,07 | 0,01 | 0,49 |
| Na₂O | 0,00 | 0,55 | 0,00 | 0,00 | 0,02 |
| SO₃ | 52,24 | 1,22 | 0,03 | 0,00 | 0,00 |
| P₂O₅ | 0,02 | 0,26 | 0,04 | 0,01 | 0,08 |
| Summe | 98,76 | 99,34 | 99,65 | 98,74 | 99,60 |

Der Ton hatte eine Oberfläche nach N₂-BET von 42,11 m²/g. Die Phasenzusammensetzungen des verwendeten Tons wurde mittels Röntgendiffraktometrie (RBA) bestimmt und weitergehend mittels Thermogravimetrie (TGA) verifiziert.

Demgemäß enthielt der Ton als Hauptphasne Kaolinit und Quarz, als Nebenphasen Goethit und Montmorellonit sowie Spuren von Illit und Opal. Die Klassifizierung (Haupt- und Nebenphasen, Spuren) wurde abgeschätzt und stellt keine quantitative Bestimmung dar. Ein Großteil der Probe liegt in einer röntgenamorphen Fraktion vor. Eine genaue Quantifizierung / Phasenzusammensetzung solch komplexer Systeme ist äußert schwierig.

### Beispiel 1

Die Ton-Dolomitmischung wurde unter oxidierenden und zum Vergleich unter reduzierenden Bedingungen gebrannt. Es wurden drei Brenntemeperaturen und zwei Materialien, nämlich ein 66% Dolomit - 34% Ton Gemisch sowie zum Vergleich der Ton alleine, getestet. Die beiden Proben wurden jeweils direkt für eine Stunde bei 700 °C, 800 °C oder 900 °C gebrannt. Die Einstellung der reduzierenden Atmosphäre wurde durch die Verwendung gemahlener Kohle erreicht. Hierzu wurde der Kohlenstaub in einen großen Tiegel (250 ml) überführt und anschließend die Probe in einem kleinen Tiegel (30 ml) in den größeren gestellt. Anschließend wurde das Gefäß mit einem Deckel geschlossen.

Die gebrannten Proben wurden einer subjektiven Farbcharakterisierung unterzogen. Die Ergebnisse sind in Tabelle 3 dargestellt. In Klammern sind die entsprechenden Werte des L*a*b*-Farbraums () und nach CMYK [] angegeben. Diese Einteilung wurden subjektiv vorgenommen.

**Tabelle 3:**

| | Brenntemperatur [°C] | | |
|---|---|---|---|
| Material, Bedingungen | 700 | 800 | 900 |
| Ton, oxidierend | | Rot (50 36,6 45) [7 84 92 1] | |
| Ton, reduzierend | | Grau, leicht bräunlich (70 0 0) [26 20 22 2] bis (80 0 20) [15 15 40 1] | Grau (30 0 0) [53 43 44 29] |
| Gemisch oxidierend | Rot (50 38,3 32,1) [18 72 76 7] | | Rot (50 46 38.6) [13 78 84 3] |
| Gemisch reduzierend | Grau, leicht bräunlich (60 0 0) [36 28 31 8] bis (60 10 17,3) [25 39 50 15] | Hellgrau (70 0 0) [26 20 22 2] | Hellgrau,leicht gelblich (80 0 0) [14 10 13 0] bis (80 0 30) [1415501] |

Es wird deutlich, dass das erfindungsgemäße Verfahren geeignet ist, die Farbgebung des erzeugten Produktes gezielt zu verbessern. Weiter zeigt sich, dass im Vergleich zu reinem Ton, gebrannt unter reduzierenden Bedingungen, ein breiteres Farbspektrum eingestellt werden kann. Es ist möglich deutlich hellere Materialien zu erzeugen. Bei allen getesteten Temperaturen war es möglich, eine Braun- beziehungsweise Rotfärbung zu vermeiden. Zusätzlich zur Brenntempertur kann man die Farbgebung, im Vergleich zum reinen Ton, durch die Wahl der Mischungszusammensetzung gezielt variieren, wobei die Reaktivität des SCMs in der finalen Bindemittelmischung weiterhin erhalten wird. Weiterhin ergibt sich der Vorteil, dass das gemeinsame Brennen von Ton und Dolomit, im Vergleich zu reinem gebrannten Ton, zu einer erhöhten Reaktivität des erzeugten SCMs führt. Dieser überraschende positive Effekt zeigt sich gerade bei Temperaturen von über 900 °C.

## Patentansprüche

1. Verfahren zur Herstellung eines Klinkerersatzmaterials sowie dessen gezielte Einstellung der Farbe umfassend die Schritte:
- Bereitstellen eines Ausgangsmaterials enthaltend eine Aluminiumsilikat-Komponente und eine Dolomit-Komponente
- Umsetzen des Ausgangsmaterials zu dem Klinkerersatzmaterial durch Brennen des Ausgangsmaterials unter reduzierenden Bedingungen im Temperaturbereich von >700 °C bis 1100 °C, wenn keine Mineralisatoren enthalten sind, und im Temperaturbereich von 625 °C bis 950°C, wenn Mineralisatoren enthalten sind.

2. Verfahren gemäß Anspruch 1, **dadurch gekennzeichnet, dass** das Ausgangsmaterial durch Mischen und gemeinsames Vermahlen von Dolomit-Komponente und Aluminiumsilikat-Komponente erhalten wird.

3. Verfahren gemäß Anspruch 2, **dadurch gekennzeichnet, dass** vor oder bei dem Vermahlen ein oder mehrere Mahlhilfsmittel zugefügt werden, die vorzugsweise ausgewählt sind aus der Gruppe bestehend aus Glykole, Alkanolaminen, Alkyldialkanolaminen und Gemischen davon.

4. Verfahren gemäß einem der Ansprüche 1 bis 3, **dadurch gekennzeichnet, dass** als Ausgangsmaterial eine Mischung enthaltend 40 bis 80 Gew.-% Aluminiumsilikat-Komponente, vorzugsweise 50 bis 70 Gew.-% Aluminiumsilikat-Komponente und insbesondere 55 bis 65 Gew.-% Aluminiumsilikat-Komponente und 20 bis 60 Gew.-% Dolomit-Komponente, vorzugsweise 30 bis 50 Gew.-% Dolomit-Komponente und insbesondere 35 bis 45 Gew.-% Dolomit-Komponente verwendet wird.

5. Verfahren gemäß einem der Ansprüche 1 bis 4, **dadurch gekennzeichnet, dass** das Ausgangsmaterial, glühverlustfrei gerechnet, mindestens 5 Gew.-% MgO, bevorzugt mindestens 7 Gew.-% MgO, besonders bevorzugt mindestens 10 Gew.-% und insbesondere mindestens 12 Gew.-% MgO, als Karbonat vorliegend, enthält.

6. Verfahren gemäß einem der Ansprüche 1 bis 5, **dadurch gekennzeichnet, dass** das Ausgangsmaterial, glühverlustfrei gerechnet, mindestens 8 Gew.-% Al₂O₃, bevorzugt mindestens 15 Gew.-% Al₂O₃, insbesondere mindestens 20 Gew.-% Al₂O₃, enthält.

7. Verfahren gemäß einem der Ansprüche 1 bis 6, **dadurch gekennzeichnet, dass** das Ausgangsmaterial, glühverlustfrei gerechnet, mindestens 15 Gew.-% SiO₂, bevorzugt mindestens 25 Gew.-% SiO₂, insbesondere mindestens 40 Gew.-% SiO₂, enthält.

8. Verfahren gemäß einem der Ansprüche 1 bis 7, **dadurch gekennzeichnet, dass** das Ausgangsmaterial für 5 bis 240 Minuten, bevorzugt für 25 bis 120 Minuten und insbesondere für 40 bis 75 Minuten unter reduzierenden Bedingungen gebrannt wird.

9. Verfahren gemäß Anspruch 8, **dadurch gekennzeichnet, dass** das Ausgangsmaterial in einem direkt oder indirekt befeuerten Drehrohrofen, einem Schacht- oder Etagenofen gebrannt wird.

10. Verfahren gemäß einem der Ansprüche 1 bis 7, **dadurch gekennzeichnet, dass** das Ausgangsmaterial in einem Fließbett- oder Wirbelschichtreaktor oder einem Flash Calciner für 5 bis 300 Sekunden, bevorzugt für 10 bis 150 Sekunden und insbesondere für 20 bis 100 Sekunden, unter reduzierenden Bedingungen gebrannt wird.

11. Verfahren gemäß einem der Ansprüche 1 bis 10, **dadurch gekennzeichnet, dass** die reduzierende Atmosphäre durch die Zugabe von Kohlenstoff, Kohlenmonoxid, organischen Verbindungen, Ammoniak, Schwefel, Methan oder anderen Gase der Kohlenwasserstoffgruppe und/oder prozesstechnisch durch entsprechend gewählte Brennstoffmengen und/oder die Minimierung des Sauerstoffeintrages eingestellt wird.

12. Verfahren gemäß einem der Ansprüche 1 bis11, **dadurch gekennzeichnet, dass** das Klinkerersatzmaterial auf eine Feinheit von 2000 bis 10000 cm²/g (Blaine), vorzugsweise von 3500 bis 8000 cm²/g, und besonders bevorzugt von 4000 bis 7000 cm²/g, gemahlen wird.

13. Verfahren gemäß Anspruch 12, **dadurch gekennzeichnet, dass** vor oder bei dem Mahlen ein oder mehrere Mahlhilfsmittel zugefügt werden, die vorzugsweise ausgewählt sind aus der Gruppe bestehend aus Glykolen, Alkanolaminen, Alkyldialkanolaminen und Gemischen davon.

14. Verfahren gemäß mindestens einem der Ansprüche 1 bis 13, **dadurch gekennzeichnet, dass** das Ausgangsmaterial keine Mineralisatoren enthält und bei 825 °C bis 1000 °C, bevorzugt bei 850 °C bis 975 °C, gebrannt wird.

15. Verfahren gemäß mindestens einem der Ansprüche 1 bis 14 **dadurch gekennzeichnet, dass** das Ausgangsmaterial einen oder mehrere Mineralisatoren enthält und bei 625 °C bis 950 °C, vorzugsweise bei 675 °C bis 900 °C, insbesondere bei 800 °C bis 875 °C, gebrannt wird.

16. Verfahren gemäß Anspruch 15, **dadurch gekennzeichnet, dass** der oder die Mineralisatoren ausgewählt sind aus der Gruppe bestehend aus Borax, Glasabfällen, Eisensalzen (z.B. Sulfaten, Hydroxiden, Carbonaten, Fluoriden, Nitraten oder Mischungen davon), Alkalisalzen (z.B. Sulfaten, Hydroxiden, (Hydrogen-)Carbonaten, Fluoriden oder Mischungen davon) und Erdalkalisalzen (z.B. Sulfaten, Hydroxiden, (Hydrogen-)Carbonaten, Fluoriden oder Mischungen davon).

17. Bindemittel umfassend
- ein gemahlenes Klinkerersatzmaterial, erhältlich gemäß einem der Ansprüche 1 bis 16 und
- mindestens einen Zement, der ausgewählt ist unter Portlandzement, Calciumsulfoaluminatzement und Calciumaluminatzement, und/oder
- mindestens einen Aktivator, der Aluminium und/oder Silizium in Form von Ionen freisetzt.

18. Bindemittel gemäß Anspruch 17, **dadurch gekennzeichnet, dass** es von 1 bis 90 Gew.-%, vorzugsweise von 10 bis 70 Gew.-% und insbesondere von 20 bis 50 Gew.-% Zement oder Aktivator und von 10 bis 99 Gew.-%, vorzugsweise von 30 bis 90 Gew.-% und insbesondere von 50 bis 80 Gew.-% Klinkerersatzmaterial enthält.

19. Bindemittel gemäß Anspruch 17 oder 18, **dadurch gekennzeichnet, dass** es einen zusätzlichen Sulfatträger enthält.

20. Bindemittel gemäß Anspruch 19, **dadurch gekennzeichnet, dass** von 0,1 bis 10 Gew.-%, bevorzugt von 1 bis 7 Gew.-% und insbesondere von 2 bis 5 Gew.-% Calciumsulfat oder eine Mischung von Calciumsulfaten enthält.

21. Bindemittel gemäß einem der Ansprüche 17 bis 20, **dadurch gekennzeichnet, dass** ein oder mehrere Abbinde- und/oder Erhärtungsbeschleuniger, vorzugsweise ausgewählt unter Aluminiumsalzen und -hydroxiden, Calcium(sulfo)aluminaten, Lithiumsalzen und -hydroxiden, anderen Alkalisalzen und -hydroxiden, Alkalisilikaten und Gemischen davon, enthalten sind, insbesondere ausgewählt unter Al₂(SO)₃, AIOOH, Al(OH)₃, Al(NO₃)₃, CaAl₂O₄, Ca₁₂A_{I14}O₃₃, Ca₃Al₂O₆, Ca₄Al₆O₁₂(SO₄), LiOH, Li₂CO₃, LiCl, NaOH, Na₂CO₃, K₂Ca₂(SO₄)₃, K₃Na(SO₄)₂, Na₂Ca(SO₄)₃, K₃Na(SO₄)₂, K₂Ca(SO₄)₂*H₂O, Li₂SO₄, Na₂SO₄, K₂SO₄, KOH, Nano- und Microsilica, Wasserglas und Mischungen davon.

22. Bindemittel gemäß einem der Ansprüche 17 bis 21, **dadurch gekennzeichnet, dass** es mindestens einen Zement enthält und ein oder mehrere Aktivatoren enthalten sind, vorzugsweise in einer Menge von 0,1 bis 5 Gew.-%, insbesondere von 0,5 bis 3 Gew.-% und besonders bevorzugt von 1 bis 2 Gew.-%, bezogen auf die Menge des Klinkerersatzmaterials.

23. Bindemittel gemäß einem der Ansprüche 17 bis 22, **dadurch gekennzeichnet, dass** Betonverflüssiger und / oder Fließmittel und / oder Verzögerer enthalten sind, vorzugsweise auf Basis von Ligninsulfonaten; sulfoniertem Naphthalin-, Melamin- oder Phenolformaldehydkondensat; oder auf Basis von Acrylsäure-Acrylamidgemischen oder Polycarboxylatethern oder auf Basis von phosphatierten Polykondensaten; phosphatierten Alkylcarbonsäuren und Salzen dieser; (Hydroxy-)Carbonsäuren und Carboxylaten, insbesondere Citronensäure, Citrate, Weinsäure, Tartrate; Borax, Borsäure und Borate, Oxalate; Sulfanilsäure; Aminocarbonsäuren; Salicylsäure und Acetylsalicylsäure; Dialdehyde und Gemische davon, enthalten sind.

24. Bindemittel gemäß mindestens einem der Ansprüche 17 bis 23, **dadurch gekennzeichnet, dass** Zusatzstoffe, z.B. Gesteinsmehl, insbesondere Kalkstein und/oder Dolomit, gefälltes (Nano)CaCO₃, Pigmente, Fasern und Mischungen von zwei oder mehr davon, enthalten sind, vorzugsweise in einem Anteil von maximal 40 Gew.-%, besonders bevorzugt von 5 bis 30 Gew.-% und insbesondere von 10 bis 20 Gew.-%.

25. Bindemittel gemäß mindestens einem der Ansprüche 17 bis 24, **dadurch gekennzeichnet, dass** zusätzlich Hüttensand, Flugasche, SiO₂ in Form von Silikastaub, Microsilica, und/oder pyrogener Kieselsäure enthalten ist/sind, vorzugsweise in einem Anteil von maximal 40 Gew.-%, besonders bevorzugt von 5 bis 30 Gew.-% und insbesondere von 10 bis 20 Gew.-%.

26. Bindemittel gemäß mindestens einem der Ansprüche 17 bis 21 und 22 bis 25, **dadurch gekennzeichnet, dass** ein Aktivator enthalten ist, der vorzugsweise ausgewählt ist aus der Gruppe bestehend aus Al₂(SO₄)₃, Al(OH)₃ und Calciumaluminate wie CA, C₃A und C₁₂A₇, und außerdem Nano- oder Microsilica, Wasserglas und Mischungen davon.
